# EUROPEAN PATENT SPECIFICATION

(11) **EP 1 104 511 B1**
(45) Date of publication and mention of the grant of the patent: **02.07.2003**
(21) Application number: 99934958.2
(22) Date of filing: 26.07.1999
(51) Int. Cl.: F16D 65/12

(54) **DISC BRAKE SYSTEM**
SCHEIBENBREMSSYSTEM
SYSTEME DE FREIN A DISQUE

(30) Priority: 15.08.1998 GB 9817749
(43) Date of publication of application: 06.06.2001
(73) Proprietor: Delphi Technologies, Inc., Troy, MI 48098-2815 (US)
(72) Inventor: BUNKER, Kenneth James, Rearsby, Leicester LE7 4YN (GB)
(74) Representative: Lamb, Richard Andrew
(86) International application number: GB9902408
(87) International publication number: WO00009907

(56) References cited:
- WO-A-98/26192
- DE-A- 2 039 003
- US-A- 4 256 209

## Description

This invention is concerned with a disc brake system according to the preamble of claim 1 for example for a wheel of a vehicle.

A conventional disc brake system comprises a hub mounted on a suspension link for rotation relative thereto, the hub providing a mounting for a wheel, and a disc brake comprising a brake disc mounted for rotation with the hub, friction material pads arranged on opposite sides of the disc, and at least one piston and cylinder assembly operable to urge the pads into engagement with the disc, to brake the hub and hence the wheel. Conventionally, the piston and cylinder assembly is slidably mounted on a slide bolted to the suspension link of the vehicle. The disc is conventionally rigidly fixed to the hub, and wear of the pads and/or the disc is accommodated by the sliding movement of the cylinder.

Disc brake systems which have discs which are non-rotational relative to the hub but are slidable on the hub by means of splines are also known, for example, in GB 1 396 503 and WO 98/25804. However, such systems are associated with several technical problems including that splines on the hub and teeth on the disc pose difficulties in accuracy of manufacture. In addition, such systems are prone to wear caused by fretting of the splines and the teeth when in use. Further, where the disc and hub are made of steel, they may be prone to corrosion at the splines and the teeth.

It is known from GB 983 548 to transmit driving force between the hub and a disc by means of axially-extending rollers which are captive between the hub and the disc. It is also known from DE 2 039 003 (which shows a disc brake system according to the preamble of claim 1) and WO 98/26192 to provide such a roller drive between a hub and two discs which are slidable axially on the hub. In these known arrangements, each captive roller can turn on its own longitudinal axis and wear is distributed more evenly around the roller. Furthermore, corrosion problems are reduced. The rollers are mounted in pockets which are partly defined by the disc and partly defined by the hub and are retained against axial movement on the hub by abutments of the hub which extend partially across the end surfaces of the rollers. These known systems have the disadvantage that the provision of the abutments at the ends of the rollers increases the weight of the hub. Such systems are also difficult to assemble.

It is an object of the present invention to provide a disc brake system having a lighter hub and which is easier to assemble.

The invention provides a disc brake system according to claim 1.

In a disc brake system according to the invention, the roller which is keyed to the disc does not require abutments to retain it on the hub, since it is retained by the disc which is itself retained on the hub by friction material of the brake mounted on both sides of the disc. The roller slides on the hub with the disc. Hence, as abutments are not required to retain the roller on the hub, the weight of the hub is reduced. The other rollers may also all be keyed to the disc, thereby increasing the potential for saving weight. The roller or each roller can easily be assembled on the disc and assembled on the hub with the disc. The disc may be keyed to one or more of the rollers with the disc sliding on other of the rollers to which it is not keyed. The disc brake system may also comprise a plurality of discs mounted on a common hub. In this case, the rollers may all be keyed to the same disc to slide therewith while the other disc or discs slide on the rollers. Alternatively, one or more of the rollers may be keyed to each disc so that each disc slides with at least one roller and slides on at least one roller. Symmetrical arrangements are preferred, eg a system may comprise two discs and four rollers, each disc being keyed to two of the rollers which are diametrically opposed to one another with respect to the axis of the hub, this arrangement allows the discs to be identical.

A disc brake system according to the invention may be of the type disclosed in WO 98/25804. That brake system comprises two discs which are slidable on the same hub under the control of leaf springs which act between the hub and the discs. The system also comprises a cylinder which is integrally formed with a suspension link and a caliper also fixed to the suspension link, the caliper having supports for friction pads mounted thereon. In a system according to the invention, the mounting means by which the discs are mounted on the hub disclosed herein replaces the splined arrangement disclosed in WO 98/25804.

In a disc brake system according to the invention, the roller may be keyed to the disc by a projection of the disc which extends into an annular groove in the roller, the groove being coaxial with the roller. This arrangement leaves the roller free to rotate about its axis.

In a disc brake system according to the invention, the system may also comprise resilient force applying means acting between the disc and the hub. The resilient force applying means may comprise a plurality of leaf springs. At least some of the leaf springs may be positioned between the rollers around the hub. The leaf springs may be secured to the outer surface of the hub in a manner such that the springs extend tangentially of the hub when the disc is not mounted on the hub but are resiliently deformed in mounting the disc.

The rollers may have surfaces formed from a material of higher corrosion-resistance than steel, such as nickel-chrome. This has the advantage that the roller surface is more hard-wearing and less prone to corrosion.

There now follows a detailed description, to be read with reference to the accompanying drawing, of a disc brake system which is illustrative of the invention.

In the drawings:
Figure 1 is a front elevation of the illustrative disc brake system; and
Figure 2 is a cross-sectional view taken on the line A-A in Figure 1.

The illustrative disc brake system 10 is for braking a wheel of a vehicle. The system 10 comprises two discs 12 and 14 and a hub 16 which is arranged to rotate about a central axis 18 thereof. The hub 16 is mounted in a conventional manner on a suspension link (not shown) of the vehicle and the wheel (not shown) is bolted against the hub through holes 20 in the hub.

The discs 12 and 14 are both generally annular plates made of steel. Each disc 12 and 14 has an inner surface 22 which is generally cylindrical about the axis 18. The inner surface 22 of the disc 12 has four recesses 24 formed therein, the recesses 24 being equally-spaced circumferentially about the axis 18. Each recess 24 extends parallel to the axis 18 throughout the thickness of the disc 12 and has a constant transverse cross-section which is generally semi-circular. The inner surface 22 of the other disc 14 has four recesses 26 therein which are similar to the recesses 24 of the disc 12 except that the generally semi-circular transverse cross-section of the recesses 26 has a greater radius than that of the recesses 24. The recesses 26 are also equally-spaced circumferentially about the axis 18.

A mounting portion of the hub 16 has the shape of a hollow cylinder about the axis 18 and another portion of the hub 16 has the shape of an internal flange formed integrally with said mounting portion at one end thereof. The flange surrounds a hole 28 in which a drive shaft (not shown) of the vehicle is received. The drive shaft makes a conventional splined connection (not shown) with the flange so that the hub 16 is rotated by the drive shaft. The bolt holes 20 are formed in the flange.

The hub 16 has an outer surface 30 which is generally cylindrical about the axis 18. The radius of the surface 30 is less than that of the inner surfaces 22 of the discs 12 and 14 so that the discs can be fitted over the hub 16. The surface 30 has four recesses 32 formed therein, the recesses 32 being equally-spaced circumferentially about the axis 18. Each recess 32 extends parallel to the axis 18 throughout the length of the hub 16 and has a constant transverse cross-section which is generally semi-circular and of the same radius as the recesses 26 of the disc 14, ie a greater radius than that of the recesses 24 of the disc 12.

The system 10 also comprises mounting means by which the discs 12 and 14 are mounted side-by-side on the hub 16 so that the hub and the discs rotate as a unit about the axis 18 and the discs 12 and 14 can both perform axial sliding movement on the hub 16, the sliding movement being limited by contact of the discs 12 and 14 with friction material pads of the disc brake (not shown). The mounting means comprises four rollers 34 each of which has its longitudinal axis arranged substantially parallel to the axis 18 of the hub 16. Each roller 34 is cylindrical and has a radius such that the roller will fit closely into the recesses 26 of the disc 14 and will also fit closely into the recesses 32 of the hub 16. Adjacent one end thereof, each roller 34 has an annular groove 36 therein. The bottom surface of the groove 36 is cylindrical and co-axial with the roller 34. The groove 36 has a depth and a width such that the portions of the disc 12 which define the recesses 24 will fit closely into the groove 36. Each roller 34 is received in a pocket defined partly by a recess 32 of the hub 16 and partly by one of the recesses 26 of the disc 14, and partly by one of the recesses 24 of the disc 12, the disc 12 projecting into the grooves 36 of all four rollers 34. The rollers 34 are, thus, equally-spaced circumferentially about the axis 18 and the recesses 24 and 26 of the discs 12 and 14 are aligned with the recesses 32 of the hub 16.

The rollers 34 engage both discs 12 and 14 and the hub 16 so that the rollers 34 transmit rotational drive between the hub 16 and the discs 12 and 14. The rollers 34 are able to turn about their own axes to even-out wear. The rollers 34 also provide bearing surfaces for the aforementioned sliding movement of the discs 12 and 14 on the hub 16. When the brake is operated, friction material pads (not shown) engage the discs 12 and 14 which move axially on the hub 16 until clearances between the discs and the pads are closed and full braking force is applied. This movement increases as the pads wear. Specifically, as the disc 12 slides on the hub 16, it takes the rollers 34 with it because of engagement of the disc 12 with side surfaces of the grooves 36, the rollers 34 sliding on the hub 16 and sliding past the disc 14. However, when the disc 14 moves, the disc 14 slides on surfaces of the rollers 34. Thus, the rollers 34 are keyed to the disc 12 by the projection of the disc 12 into the grooves 36 so that the rollers 34 slide with the disc 12 on the hub 16 and the disc 12 acts to retain the rollers 34 in their pockets, the disc 12 itself being retained by the friction material pads of the brake.

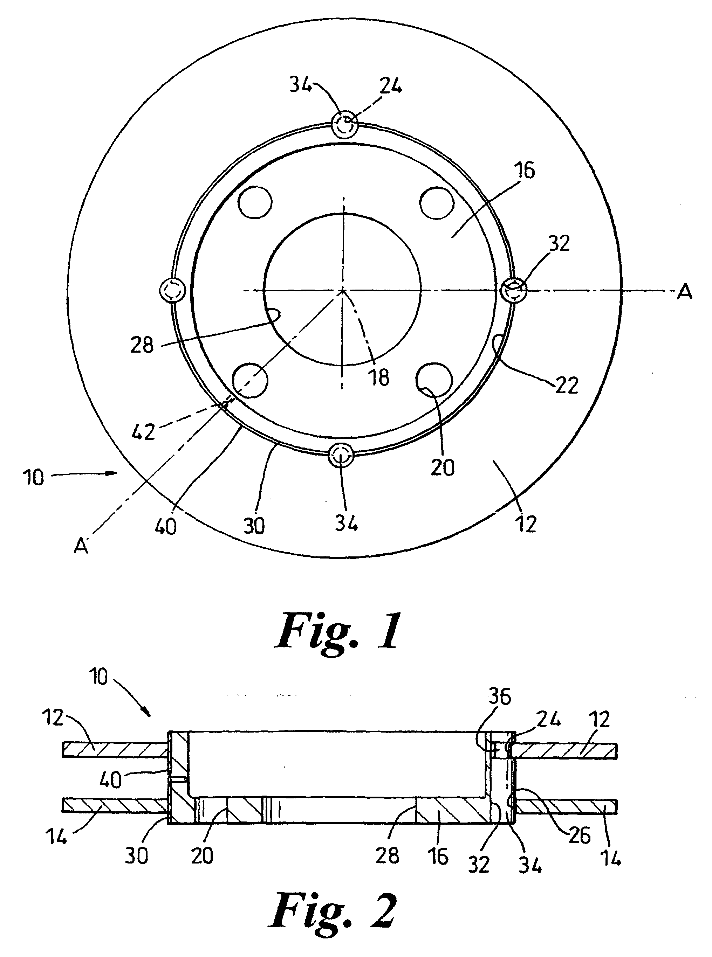

The system 10 also comprises resilient force applying means in the form of four leaf springs 40 which are secured in the circumferential centres of the portions of the outer surface 30 of the hub 16 which are between the rollers 34. Each spring 40 extends tangentially of the hub 16 when the discs 12 and 14 are not mounted on the hub 16 but are deformed when the discs 12 and 14 are mounted on the hub 16 so that they apply force between the hub 16 and the discs 12 and 14. The leaf springs 40 are made of sheet spring steel from 0.25-0.3mm thick and are rectangular in plan view. Each leaf spring 40 is secured to the hub 16 by a screw 42 (only one shown in Figure 1).

## Claims

1. A disc brake system (10) comprising a plurality of discs (12), and a hub (16) which is arranged to rotate about an axis (18) thereof, the system (10) also comprising mounting means (34) by which the discs (12) are mounted on the hub (16) so that the hub and the discs rotate as a unit about said axis (18) and the discs (12) can each perform axial sliding movement on said hub (16), the mounting means comprising a plurality of rollers (34) each of which has its axis arranged substantially parallel to said axis (18) of the hub, each roller (34) being received in a pocket (24, 32) defined partly by said hub (16) and partly by said discs (12) so that the rollers (34) transmit rotational drive between the hub (16) and the discs (12) and also provide bearing surfaces for said sliding movement, **characterised in that** said rollers (34) are keyed to said discs (12) so that each roller (34) slides on the hub (16) with one of the discs (12) and the disc (12) acts to retain said roller (34) in its pocket (24, 32), one or more of the rollers (34) being keyed to each disc (12) so that each disc slides with at least one roller, each disc (12) sliding on at least one other roller.

2. A disc brake system according to claim 1, **characterised in that** each disc (12, 14) is keyed to two of the rollers (34) which are diametrically opposed to one another with respect to the axis (18) of the hub (16).

3. A disc brake system according to either one of claims 1 and 2, **characterised in that** each roller (34) is keyed to on of the discs (12) by a projection of the disc (12) which extends into an annular groove (36) in the roller, the groove being coaxial with the roller.

4. A disc brake system according to any one of claims 1 to 3, **characterised in that** the system (10) also comprises resilient force applying means (40) acting between the disc (12) and the hub (16).

5. A disc brake according to claim 4, **characterised in that** the resilient force applying means comprises a plurality of leaf springs (40).

6. A disc brake system according to claim 5, **characterised in that** at least some of the leaf springs (40) are positioned between the rollers (34) around the hub (16).

7. A disc brake system according to either one of claims 5 and 6, **characterised in that** the leaf springs (40) are secured to the outer surface (30) of the hub (16) in a manner such that the springs (40) extend tangentially of the hub (16) when the disc (12) is not mounted on the hub.

## Patentansprüche

1. Scheibenbremssystem (10) mit mehreren Scheiben (12) und einer Nabe (16), die so angeordnet ist, daß sie sich um ihre Achse (18) dreht, wobei das System (10) ferner Befestigungsmittel (34) enthält, durch die die Scheiben (12) derart an der Nabe (16) befestigt sind, daß sich die Nabe und die Scheiben als eine Einheit um die Achse (18) drehen und die Scheiben (12) jeweils eine Gleitbewegung auf der Nabe (16) ausführen können, wobei die Befestigungsmittel mehrere Rollen (34) umfassen, von denen jede mit ihrer Achse im wesentlichen parallel zu der Achse (18) der Nabe (16) angeordnet ist, wobei jede Rolle (34) in einer Aussparung (24, 32) aufgenommen ist, die zum Teil von der Nabe (16) und zum Teil von den Scheiben (12) gebildet ist, so daß die Rollen (34) Rotationsantrieb zwischen der Nabe (16) und den Scheiben (12) übertragen und zudem Lagerflächen für die Gleitbewegung bieten, **dadurch gekennzeichnet, daß** die Rollen (34) so an den Scheiben (12) befestigt sind, daß jede Rolle (34) mit einer der Scheiben (12) auf der Nabe (16) gleitet und die Scheibe (12) so wirkt, daß sie die Rolle (34) in ihrer Aussparung (24, 32) hält, wobei eine oder mehrere der Rollen (34) an jeder Scheibe (12) befestigt sind, so daß jede Scheibe mit zumindest einer Rolle gleitet, wobei jede Scheibe (12) auf zumindest einer anderen Rolle gleitet.

2. Scheibenbremssystem nach Anspruch 1, **dadurch gekennzeichnet, daß** jede Scheibe (12, 14) an zwei der Rollen (34) befestigt ist, die einander bezüglich der Achse (18) der Nabe (16) diametral gegenüberstehen.

3. Scheibenbremssystem nach einem der Ansprüche 1 und 2, **dadurch gekennzeichnet, daß** jede Rolle (34) durch einen Vorsprung der Scheibe (12) an einer der Scheiben (12) befestigt ist, der sich in eine ringförmige Nut (36) in der Rolle erstreckt, wobei die Nut koaxial mit der Rolle ist.

4. Scheibenbremssystem nach einem der Ansprüche 1 bis 3, **dadurch gekennzeichnet, daß** das System (10) ferner elastische Mittel (40) zum Ausüben einer Kraft enthält, die zwischen der Scheibe (12) und der Nabe (16) wirken.

5. Scheibenbremssystem nach Anspruch 4, **dadurch gekennzeichnet, daß** die elastischen Mittel zum Ausüben einer Kraft mehrere Blattfedern (40) umfassen.

6. Scheibenbremssystem nach Anspruch 5, **dadurch gekennzeichnet, daß** zumindest einige der Blattfedern (40) zwischen den Rollen (34) um die Nabe (16) herum angeordnet sind.

7. Scheibenbremssystem nach einem der Ansprüche 5 und 6, **dadurch gekennzeichnet, daß** die Blattfedern (40) derart an der Außenfläche (30) der Nabe (16) befestigt sind, daß die Federn (40) tangential zu der Nabe (16) verlaufen, wenn die Scheibe (12) nicht an der Nabe montiert ist.

## Revendications

1. Système de frein à disque (10) comprenant une pluralité de disques (12), et un moyeu (16) qui est agencé pour tourner sur un axe (18) de celui-ci, le système (10) comprenant également des moyens de montage (34) grâce auxquels les disques (12) sont montés sur le moyeu (16) de telle sorte que le moyeu et le disque tournent en tant qu'unité sur ledit axe (18) et les disques (12) peuvent chacun effectuer un mouvement de glissement axial sur ledit moyeu (16), les moyens de montage comprenant une pluralité de rouleaux (34) chacun d'entre eux comportant son axe agencé sensiblement parallèle audit axe (18) du moyeu, chaque rouleau (34) étant reçu dans une poche (24, 32) définie en partie par ledit moyeu (16) et en partie par lesdits disques (12) de telle sorte que les rouleaux (34) transmettent un entraînement de rotation entre le moyeu (16) et les disques (12) et proposent également des surfaces d'appui pour ledit mouvement de glissement, **caractérisé en ce que** lesdits rouleaux (34) sont calés avec lesdits disques (12) de telle sorte que chaque rouleau (34) glisse sur le moyeu (16) avec un des disques (12) et le disque (12) agit pour retenir ledit rouleau (34) dans sa poche (24, 32), un ou plusieurs des rouleaux (34) étant calé(s) avec chaque disque (12) de telle sorte que chaque disque glisse avec au moins un rouleau, chaque disque (12) glissant sur au moins un autre rouleau.

2. Système de frein à disque selon la revendication 1, **caractérisé en ce que** chaque disque (12, 14) est calé avec deux des rouleaux (34) qui sont diamétralement opposés l'un à l'autre par rapport à l'axe (18) du moyeu (16).

3. Système de frein à disque selon l'une ou l'autre des revendications 1 et 2, **caractérisé en ce que** chaque rouleau (34) est calé sur un des disques (12) par une saillie du disque (12) qui s'étend dans une rainure annulaire (36) dans le rouleau, la rainure étant coaxiale avec le rouleau.

4. Système de frein à disque selon l'une quelconque des revendications 1 à 3, **caractérisé en ce que** le système (10) comprend également un moyen d'application de force élastique (40) agissant entre le disque (12) et le moyeu (16).

5. Frein à disque selon la revendication 4, **caractérisé en ce que** le moyen d'application de force élastique comprend une pluralité de ressorts à lames (40).

6. Système de frein à disque selon la revendication 5, **caractérisé en ce qu'**au moins certains des ressorts à lames (40) sont positionnés entre les rouleaux (34) autour du moyeu (16).

7. Système de frein à disque selon l'une ou l'autre des revendications 5 et 6, **caractérisé en ce que** les ressorts à lames (40) sont protégés de la surface externe (30) du moyeu (16) d'une telle façon que les ressorts (40) s'étendent de manière tangentielle du moyeu (16) lorsque le disque (12) n'est pas monté sur le moyeu.
